# EUROPEAN PATENT APPLICATION

(11) **EP 4 746 366 A1**
(43) Date of publication of application: **20.05.2026**
(21) Application number: 25214917.4
(22) Date of filing: 11.11.2025
(51) Int. Cl.: H04L 41/16, G05B 19/418, H04L 41/0853, H04L 41/142, H04L 9/40, G06F 21/57

(54) **COMPUTER SYSTEM AND METHOD FOR MANAGING NETWORKED ASSETS**

(30) Priority: 13.11.2024 US 202418946452
(71) Applicant: Schneider Electric Systems USA, Inc., Foxborough, MA 02035 (US)
(72) Inventor: POCHAIAH, Anil Kumar Nalala, Foxboro, MA (US); SELVARAJ, Sundaramoorthiraj, Foxboro, MA (US); ELBARBIR, Shawky Adel Ismaeel, Foxboro, MA (US)
(74) Representative: Manitz Finsterwald Patent- und Rechtsanwaltspartnerschaft mbB

(57) **Abstract**

A computer-implemented method and system for performing one or more AI techniques on data captured from an Industrial Automation Control Systems (IACS) system, wherein the IACS is associated with at least one industrial plant. Data is captured from the IACS relating to each of a plurality of assets associated with the at least one industrial plant. The captured IACS data is analyzed to determine a plurality of assets associated with the at least one industrial plant contained in the captured IACS data, and metadata respectively associated with each determined asset. An electronic data repository is generated that provides an electronic inventory for each of the plurality of assets and associated metadata. An AI engine coupled to the electronic data repository, performs one or more AI techniques on the plurality of assets and the metadata respectively associated with each determined asset, to perform a certain task.

## Description

### Background

### 1. FIELD

The illustrated embodiments relate generally to the field of Industrial Automation Control Systems (IACS) systems. The illustrated embodiments more particularly relate to systems and methods for creating a central repository of networked assets and using one or more artificial intelligence (Al) techniques for managing inventoried assets both in Industrial Control and Safety Systems (ICSS).

### 2. DESCRIPTION OF RELATED ART

The architecture of modern industrial operations, such as that found in large industrial plants is often enabled at the field-level, process-level, and the system-level by various networked devices. These devices monitor and collect data, such as measurements, reflective of the operations of the automated process. These devices are connected to or in communication with machines known as controllers that operate at different levels to process the data collected and issue commands back to, or to other, networked devices.

In a typical configuration, these components form Industrial Automation and Control System (IACS), and in particular both Industrial Control and Safety Systems networks. Also in a typical configuration, the control system portion of the ICSS includes, but is not limited to, Distributed Control Systems, Supervisory Control Data Acquisition Systems, etc. These industrial networks and systems can be connected to multiple networks within the plant or other industrial process facility or through networks external to the facility. This makes such "industrial networks" extremely susceptible to both internal and external cyber-attacks and other security threats. Such cyber-attacks can result in, among other things, a "loss of view" and/or a "loss of control" of individual components or entire network or system structures. A loss of view occurs when the user/automated controller is unable to access a system, either partially or fully, and thus, has no view of the process operation. A loss of control occurs when the user/automated controller is unable to send and/or receive control messages to the process control system to invoke a function and or a procedure.

Cyber security measures applied to ICSS have generally taken the form of those applied to Information Technology (IT) systems, and thus, have been relatively ineffective. Risk level to industrial systems is generally conventionally quantified via a manual process and/or with relatively limited automated assistance. Such conventional forms of the assessment process can not only be extremely time-consuming and labor-intensive, but can be excessively prone to error due, for example, due to the lack of available data required to measure the risk level, threat and vulnerability likelihood, etc. Also, the consequence of a certain threat is difficult to quantify. In addition, the manual process is highly dependent on skilled analysts and their level of expertise, making the manual process not only excessively costly (monetarily), but also extremely subjective. Hence, such manual estimation of risk, vulnerability, etc., associated threat and associated consequences are highly susceptible to inconsistencies. This can be especially true across different systems and plants within a company or industry as the risk facing such different systems/entities can be vastly different.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

The illustrated embodiments described herein provide an improved computer asset management tool/application for dynamically determining and generating a system level network architecture of at least one industrial plant, for enabling one more tasks to be performed on either the generated system level network architecture and/or on one or more networked assets included in the generated system level network architecture, using one or more AI techniques as mentioned above. Additionally, via one or more AI techniques, a central data repository of aggregated data relating to networked assets from one or more industrial plants is generated, and dynamically updated with changes to assets, which is utilized to dynamical generate the aforesaid system level network architecture.

To achieve these and other advantages and in accordance with the purpose of the illustrated embodiments, in one aspect, described is a computer-implemented method and system for performing one or more AI techniques on data captured from an Industrial Control and Safety System (ICSS), wherein the ICSS is associated with at least one industrial plant. Data is captured from the ICSS relating to each of a plurality of assets associated with the at least one industrial plant. The captured ICSS data is analyzed to determine a plurality of assets associated with the at least one industrial plant contained in the captured ICSS data, and metadata respectively associated with each determined asset. An electronic data repository is generated that provides an electronic inventory for each of the plurality of assets and associated metadata. An AI engine coupled to the electronic data repository, performs one or more AI techniques on the plurality of assets and the metadata respectively associated with each determined asset, to perform a certain task.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 illustrates a diagram depicting an Artificial Intelligence (AI) device utilized with one or more of the illustrated embodiments;
FIG. 4 illustrates a diagram depicting an AI server utilized with one or more of the illustrated embodiments;
FIG. 5 illustrates a simplified system level diagram of a control monitoring system in accordance with the illustrated embodiments; and
FIG. 6 illustrates a process for performing one or more AI techniques on a asset inventory data in accordance with the illustrated embodiments.

### DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this illustrated embodiment belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

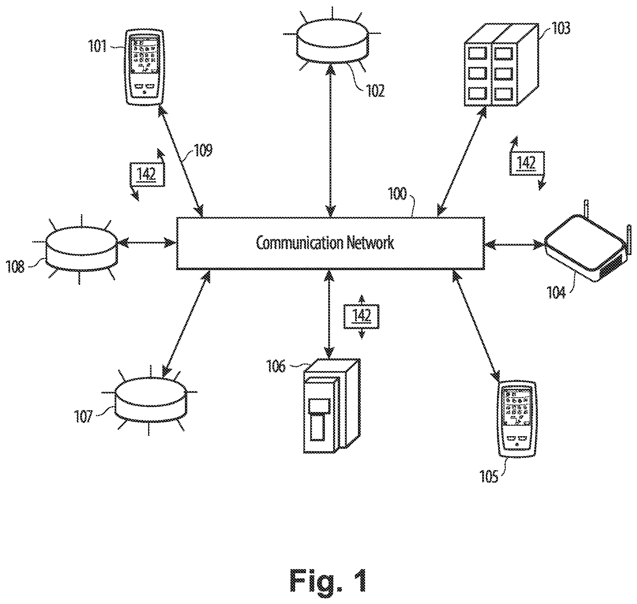

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others. Specifically, regarding buildings/plants/grids, Building Automation Control Network (BACNet), Local Operating Network (LonWorks), a Modbus protocol, OPC Unified Architecture (OPC-UA, and the IEC61850 standard may be used as communication links, for instance.

FIG. 1 is a schematic block diagram of an example communication network 100 illustratively comprising nodes/devices 101-108 (e.g., sensors 102, computing monitoring system 103, smart phone devices 105, web servers / computer systems 106 (e.g., a, ICSS system), computer systems 103, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the illustrated embodiments may be written in any combination of one or more programming languages, including an object oriented programming language such as Python, Golang, Ruby, ASP.NET, Java, , C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

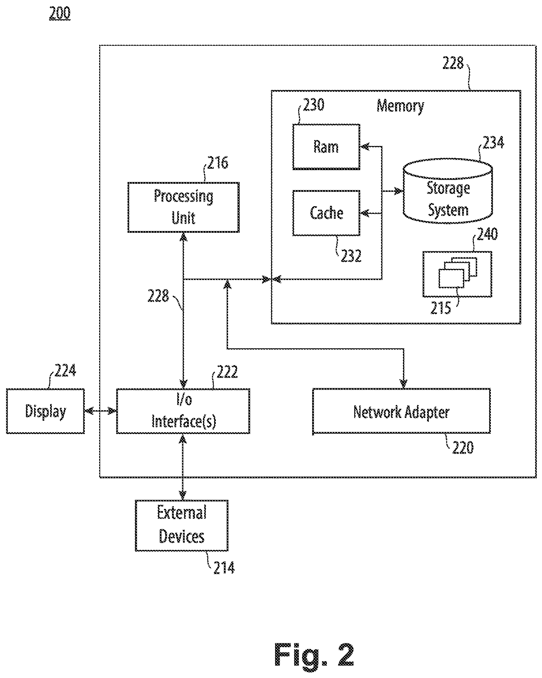

FIG. 2 is a schematic block diagram of an example network computing device 200 (e.g., computing monitoring system/device 103, ICSS system 106) that may be used (or components thereof) with one or more embodiments described herein, e.g., as one of the nodes shown in the network 100. As explained above, in different embodiments these various devices are configured to communicate with each other in any suitable way, such as, for example, via communication network 100. It is to be appreciated and understood that in certain illustrated embodiments, the computer monitoring device 103 as described herein, may be a separate computer component/system (e.g., network 100 coupled), or may be integrated as unitary component/system with an ICSS 106 computer system.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, including an ICSS computer system 106, and a computer monitoring system 103 configured and operative, using one or more artificial intelligence techniques, to detect and aggregate a plurality of assets associated with one or more industrial plants, and perform one or more AI techniques on the aggregated assets for enabling centralized management of assets associated with one or more industrial plants.

Computing device 200 is operational with numerous other special purpose computing system environments or configurations. Examples of well-known computing systems, environments, and/or configurations that may be suitable for use with computing device 200 include, but are not limited to, cloud computing systems (including, but not limited to: Infrastructure as a Service (IaaS); Software as a Service (SaaS); Platform as a Service (PaaS); and Private cloud), personal computer systems, server computer systems, thin clients, thick clients, hand-held or laptop devices, multiprocessor systems, microprocessor-based systems, programmable consumer electronics, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices. In accordance with the illustrated embodiments, computing device 200 (e.g., computer monitoring system 103) is configured and operative, using one or more artificial intelligence techniques, to detect and aggregate a plurality of assets associated with one or more industrial plants, and perform one or more AI techniques on the aggregated assets for enabling centralized management of assets associated with one or more industrial plants.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random-access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules that are configured to carry out the functions of embodiments of illustrated embodiments.

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein, including, but not limited to, using one or more artificial intelligence techniques, to detect and aggregate a plurality of assets associated with one or more industrial plants, and perform one or more AI techniques on the aggregated assets for enabling centralized management of assets associated with one or more industrial plants, such as for providing cybersecurity functionality.

It is to be appreciated and understood device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: big data technologies encompassing large and diverse datasets that are significant in volume, which are commonly used in machine learning, predictive modeling, and other advanced analytics to solve business problems and make informed decisions; non-relational databases (NoSQLs); Blob storage; relational databases (SQL); as well as microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

It is to be understood the embodiments described herein are preferably provided with self-learning / Artificial Intelligence (AI) to detect and aggregate a plurality of assets associated with one or more industrial plants, and perform one or more AI techniques on the aggregated assets for enabling centralized management of assets associated with one or more industrial plants. Thus, preferably integrated into a computer monitoring system (e.g., 103) coupled to a plurality of external databases / data sources is an AI system (e.g., an IACS, such as a ICCS system 106) that implements machine learning and artificial intelligence algorithms to conduct one or more of the above-mentioned functionalities for aggregating industrial plant assets in a central repository and using AI techniques to determine a network model for the assets so as to provide one or more functionalities thereupon, such as cybersecurity. For instance, the AI system may include two subsystems: a first sub-system that learns from historical data; and a second subsystem to identify and recommend one or more parameters or approaches based on the learning. It should be appreciated that although the AI system may be described as two distinct subsystems, the AI system can also be implemented as a single system incorporating the functions and features described with respect to both subsystems.

Also, in accordance with the illustrated embodiments, an artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value. The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function. The purpose of the learning of the artificial neural network may be to determine the model parameters that minimize a loss function. The loss function may be used as an index to determine optimal model parameters in the learning process of the artificial neural network. Machine learning may be classified into supervised learning, unsupervised learning, and reinforcement learning according to a learning method. The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

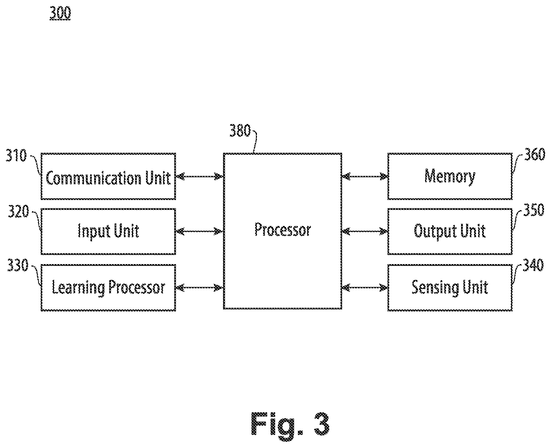

Machine learning, which is implemented as a deep neural network (DNN) including a plurality of hidden layers among artificial neural networks, is also referred to as deep learning, and the deep learning is part of machine learning. FIG. 3 illustrates an AI device 300 according to an illustrated embodiment. In accordance with the illustrated embodiments, the AI device 300 is preferably integrated into computer monitoring system 103.

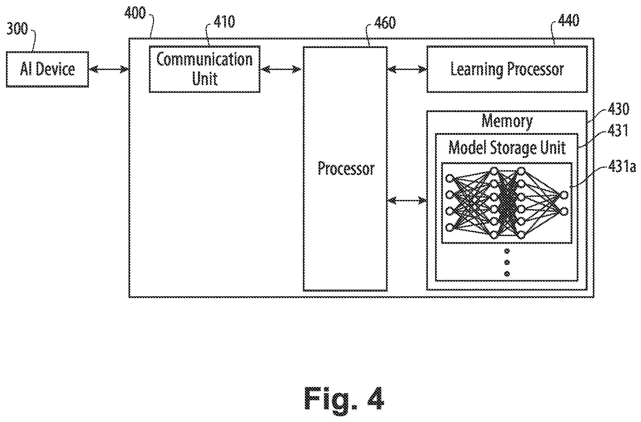

Referring now FIG. 3, in conjunction with FIGS. 1 and 2, the AI device 300 is operatively coupled to, or integrated with computing device 200, in accordance with the illustrated embodiments described herein. AI device 300 preferably includes a communication unit 310, an input unit 320, a learning processor 330, a sensing unit 340, an output unit 350, a memory 370, and a processor 380. The communication unit 310 may transmit and receive data to and from external devices such as other AI devices 300a to 300e and an AI server 400 (FIG. 4) by using wire/wireless communication technology. For example, the communication unit 310 may transmit and receive sensor information, a user input, a learning model, and a control signal to and from external devices.

The communication technology used by the communication unit 310 preferably includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 320 may acquire various kinds of input data, including, but not limited to an alarm data stream signal (e.g., a single binary alarm timeseries of alarm events) received from an ICSS 106, to be used when an output is acquired by using learning model. The input unit 320 may acquire raw input data. In this case, the processor 380 or the learning processor 330 may extract an input feature by preprocessing the input data. The learning processor 330 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 330 may perform AI processing together with the learning processor 330 of the AI server 400, and the learning processor 330 may include a memory integrated or implemented in the AI device 300. Alternatively, the learning processor 330 may be implemented by using the memory 370, an external memory directly connected to the AI device 300, or a memory held in an external device. The sensing unit 340 may acquire at least one of internal information about the AI device 300, ambient environment information about the AI device 300, and user information by using various sensors.

The output unit 350 preferably includes a display unit for outputting/displaying relevant information to a user in accordance with the illustrated embodiments described herein. The memory 370 preferably stores data that supports various functions of the AI device 300. For example, the memory 370 may store input data acquired by the input unit 320, learning data, a learning model, a learning history, and the like.

The processor 380 preferably determines at least one executable operation of the AI device 300 based on information determined or generated by using a data analysis algorithm or a machine learning algorithm. The processor 380 may control the components of the AI device 300 to execute the determined operation. To this end, the processor 380 may request, search, receive, or utilize data of the learning processor 330 or the memory 370. The processor 380 may control the components of the AI device 300 to execute the predicted operation or the operation determined to be desirable among the at least one executable operation. When the connection of an external device is required to perform a determined operation, the processor 380 may generate a control signal for controlling the external device and may transmit the generated control signal to the external device. The processor 380 may acquire intention information for the user input and may determine the user's requirements based on the acquired intention information. The processor 380 may acquire the intention information corresponding to the user input by using at least one of a speech to text (STT) engine for converting speech input into a text stream or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 330, may be learned by the learning processor 340 of the AI server 400, or may be learned by their distributed processing. The processor 380 may collect history information including the operation contents of the AI device 300 or the user's feedback on the operation and may store the collected history information in the memory 370 or the learning processor 330 or transmit the collected history information to the external device such as the AI server 400. The collected history information may be used to update the learning model.

The processor 380 may control at least part of the components of AI device 300 so as to drive an application program stored in memory 370. Furthermore, the processor 380 may operate two or more of the components included in the AI device 300 in combination so as to drive the application program.

FIG. 4 illustrates an AI server 400 according to the illustrated embodiments. It is to be appreciated that the AI server 400 may refer to a device that learns an artificial neural network by using a machine learning algorithm or uses a learned artificial neural network. The AI server 400 may include a plurality of servers to perform distributed processing or may be defined as a 5G network. At this time, the AI server 400 may be included as a partial configuration of the AI device 300 and may perform at least part of the AI processing together. The AI server 400 may include a communication unit 410, a memory 430, a learning processor 440, a processor 460, and the like. The communication unit 410 can transmit and receive data to and from an external device such as the AI device 300. The memory 430 may include a model storage unit 431. The model storage unit 431 may store a learning or learned model (or an artificial neural network 431a) through the learning processor 440.

The learning processor 440 may learn the artificial neural network 431a by using the learning data. The learning model may be used in a state of being mounted on the AI server 400 of the artificial neural network or may be used in a state of being mounted on an external device such as the AI device 300. The learning model may be implemented in hardware, software, or a combination of hardware and software. If all or part of the learning models are implemented in software, one or more instructions that constitute the learning model may be stored in memory 430. The processor 460 may infer the result value for new input data by using the learning model and may generate a response or a control command based on the inferred result value.

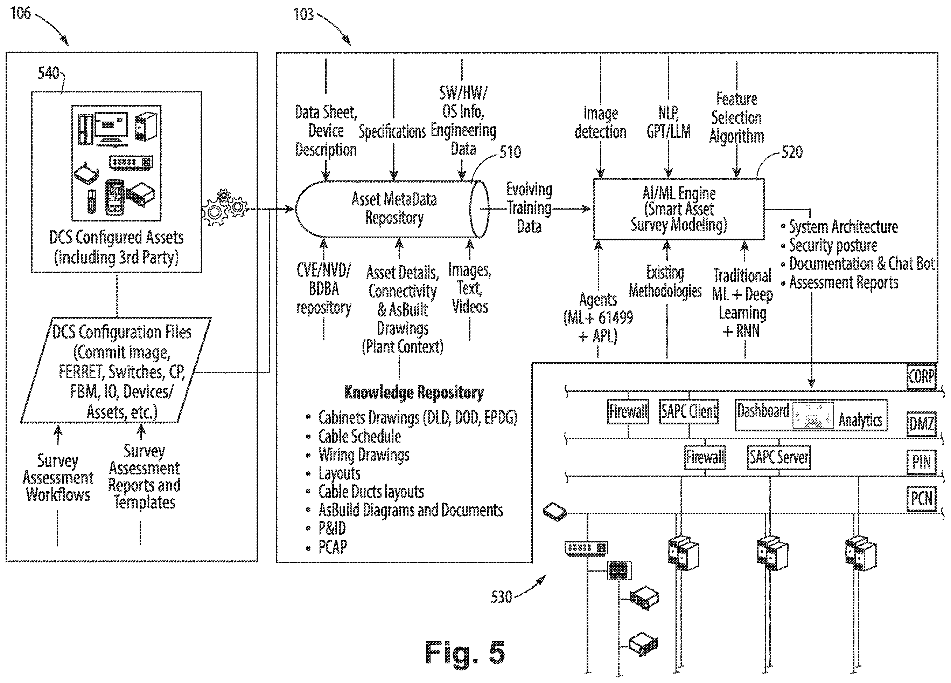

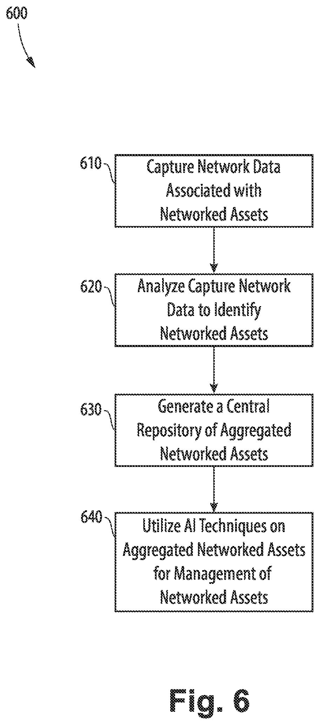

With the exemplary communication network 100 (FIG. 1), computing device 200 (FIG. 2), AI device 300 (FIG. 3) and AI server 400 (FIG. 4) being generally shown and discussed above, description of certain illustrated embodiments will now be provided with below reference to FIGS. 5 and 6 (and with continuing reference to FIGS 1-4). It is to be understood and appreciated that FIGS. 1-4 are intended to provide a brief, general description of an illustrative and/or suitable exemplary environment in which the below described illustrated embodiments may be implemented. FIGS. 1-4 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

In accordance with the illustrated embodiments, and with reference to FIG. 5, it is to be understood and appreciated that an Industrial Automation and Control System (IACS)system, such as an Industrial Control and Safety Systems (ICSS) is a computer-based system 106 that monitors and controls a plant's mechanical and electrical equipment. For instance, it is to be appreciated and understood an IACS is a critical infrastructure network that is typically made up of components such as sensors, actuators, controllers, and communication networks. IACS networks are vital for manufacturers and national services, such as power generators and chemical plants. Further, IACS networks (500) are essential for ensuring that industrial processes are operated and controlled automatically and securely. They can improve the efficiency, quality, safety, and reliability of industrial operations by automating tasks that would otherwise require manual labor or human intervention. For example, IACS networking (500) provides convergence of IACS operational technology (OT) with information technology (IT). In accordance with the illustrated embodiment of FIG. 5, and as further described below with reference to process 600 of FIG. 6, the computer monitoring system 103 includes an asset repository 510 operatively coupled to an AI model 520 (e.g., systems 300 and 400) for performing the below described functionality of process 600 of FIG. 6.

It is to be further understood and appreciated that while the illustrated embodiments are described relative for use with an ICSS system 106, it is not to be understood to be limited thereto as the computer monitoring system 103 in accordance with the illustrated embodiments may have application to other Industrial Automation Control Systems (IACS) systems, such as Safety, and hybrid or mission control systems.

In accordance with the illustrated embodiments, and with primary reference to FIGS. 5 and 6, a computer-implemented AI process using the above-described ICSS computer monitoring system 103 operatively coupled to the ICSS system 106 (FIG. 5), is described with reference to process 600 for performing one or more AI techniques on data captured from an ICSS system 106, wherein the ICSS 106 is associated with at least one industrial plant. Starting at step 610, data is captured the ICSS network 106, (via a computer network 100) preferably relating to each of a plurality of assets associated with the at least one industrial plant. It is to be appreciated and understood the plurality of assets may consist of third-party assets, and further consisting of non-networked coupled assets. In accordance with certain illustrated embodiments, the data is captured from a plurality of data sources communicatively coupled to the ICSS 106. For instance, this captured data may include one or more of: distributed control system (DCS) configured assets and files; images of assets; data sheets, device specifications, software and hardware engineering data, sensor devices, plant layout and drawings and data provided by one or more administrator users.

Next, at step 620, the computer monitoring system 103 is configured and operative to analyze the captured ICSS data to determine a plurality of assets associated with the at least one industrial plant contained in the captured ICSS data, and metadata respectively associated with each determined asset. In accordance with certain illustrated embodiments, determining an asset is based, at least in part, on analysis of network traffic data, which may include image processing of captured data relating to the asset(s). At step 630, the computer monitoring system 103 is configured and operative to generate an electronic data repository, that provides an electronic inventory for each of the plurality of assets, along with their associated metadata associated. For instance, this data, may include (but is not be understood to be limited to): DCS configuration files, data sheets, devices descriptions, specifications, sw/hw/os information, engineering data, images, texts, videos, asset details, connectivity & AsBuilt drawings, and CVE/NVD/BDBA data, relating to one or more assets in an ICSS system 106.

Next at step 640, the computer monitor system 103 is further operative and configured to perform, by the AI engine/model 520 coupled to the electronic data repository 510, one or more AI techniques on the plurality of assets and the metadata respectively associated with each determined asset as aggregated in the data repository 510, to perform a certain task. In certain embodiments, the one or more AI techniques are selected from the group consisting of Generative AI, large and/or small language modelling (LLM and/or SLM with Retrieval Augmented Generation) techniques, recurrent neural networks (RNN); convolutional neural networks (CNN); deep learning algorithms, and other applicable generative AI techniques (including, but not limited to: computer vision techniques, optical character recognition (OCR), reinforcement learning, including other advanced and/or evolving AI techniques).

In accordance with the illustrated embodiments, such a certain AI task may include generating a model of a system level network architecture (530, FIG. 5) of at least one industrial plant including at least a portion of the plurality of assets and their respective associated metadata networked coupled to one another in correlation to how the assets are actually network coupled to one another in the industrial plant, as shown in the generated model 500 of FIG. 5. For instance, this aforesaid generated system level network architecture 500 of the at least one industrial plant may be caused to be displayed on a user interactive graphically user interface (GUI) generated on a display 224 of a user computing device 200 such that user interaction with assets displayed on the GUI causes metadata information relating to a user selected asset to be then displayed on the GUI to the user. In certain embodiments, the generated model of a system level network architecture 530 of the at least one industrial plant is a Purdue model (e.g., as adopted by ISA-99). It is to be understood and appreciated that a Purdue model provides a framework for segmenting industrial control system networks from corporate enterprise networks and the internet. For instance, the model is used as a baseline architecture for all industrial control system frameworks such as API 1164 and NIST 800-82.

This generated model may: 1) recommend the type of security assessment requirement (e.g., Advanced, Fundamental, Foundational or Basic) for plant assets; and/or 2) depict the change management of the plant network 530 (e.g., an asset is added or deleted, and/or vulnerabilities introduced based on previous assessment or analysis); and/or 3) determine a calibration posture and the requirement for the assets (and in some embodiments, a repair forecast is determined), as part of the plant network 530; and/or 4) automatically train and evolve knowledge base of a customer's plant facilitating to improve the security posture on a continuous basis; and/or 5) enables custom user queries (e.g., utilizing Gen AI and LLM/SLM based techniques) to refine self-managed contextual security assessments, contextual analytics and reports; and/or 6) provide critical parameters/nodes indicators as part of the generated plant network architecture 530, wherein in the generated system architecture 530, when determined vulnerabilities are detected by the computer monitoring system 103 exceeding the limit/tolerance (e.g. high/critical - Common Vulnerability Scoring System (CVSS) value > 7.0) which require immediate user attention, highlighted in the generated system architecture 530 is indication (e.g., emphasized system nodes/assets) for providing immediate attention the "nodes/assets" of the system architecture 530 associated with the aforesaid determined system vulnerabilities.

In other illustrated embodiments, the computer monitor system 103 is further operative and configured to provide AI cybersecurity analysis for generated "contextual" security models (e.g. Localized Report, Vulnerability Assessment, Threat/Event/Incident models, OS and Application Patch and Whitelist models, Product Impact, License Risks, Operational and Security Risk models, Asset Calibration model, Connectivity and Communication models, Integrity models, Secured Architecture Recommendation models, Asset detail, identity and Lifecycle models, Health Status, Memory Exception and Injection models and contextual models driven through data sources identified) for the system level network architecture 530 of at least one industrial plant. It is to be understood and appreciated that the aforesaid AI cybersecurity analysis may include monitoring (e.g., offline, dynamic and live), and detecting network security vulnerability of the generated model 530 of the system level network architecture. It is to be understood and appreciated that the aforesaid AI cybersecurity analysis may be based, at least in part, on risk tolerances (and, in certain embodiments, Annual Loss Expectancy (ALE)) associated with a customer associated with the at least one industrial plant. In certain illustrated embodiments, the AI cybersecurity analysis for the generated model 530 of the system level network architecture of at least one industrial plant is contingent upon regional standards (and regulations) relative to a geographic location associated with the at least one industrial plant. In certain embodiments, this includes generation of generative AI (e.g., multimodal) based standardized reports according to regional standards and regulations and highlighting/indicating key security aspects/keywords in a generated report. Other embodiments include generation of generative AI (e.g., multimodal) based standardized reports for facilitating "translation" of standard security analysis report templates, preferably according to regional standards and regulations. Additionally, the computer monitoring system may be configured and operative to determine annual loss expectancy, based upon AI predictive analytics, and/or risk mitigations actions to be initiated for mitigating predictive risks (e.g. to address Annual Loss Expectancy (ALE)) associated with the generated model 530 of the system level network architecture of at least one industrial plant. For instance, the AI cybersecurity analysis may include determining licensing compliance and its associated risks (e.g. usage of AGPL license types in the open source) for the at least a portion of the plurality of assets included in the generated model 530 of a system level network architecture of at least one industrial plant.

In accordance with other illustrated embodiments, the computer monitoring system 103 is configured and operative to provide: 1) asset and inventory management (including third-party assets (which may include non-networked coupled assets) for at least a portion of the plurality of assets included in the generated model 530 of a system level network architecture of the at least one industrial plant; and/or 2) determine incident response by the system level network architecture 530 of the at least one industrial plant responsive to contemplated one or more changes to the system level network architecture 530 and/or one or more assets included in the system level network architecture 530; and/or 3) determine one or more physical security vulnerabilities with recommendations for at least one industrial plant based upon AI analysis of the system level network architecture 530 of the at least one industrial plant. Additionally, the computer monitoring system 103 may be configured and operative to: 4) determine anomalies associated with the communications protocols used in the system level network architecture 530 of the at least one industrial plant (which may include determination of associated anomalies (e.g. allowed/denied connections by a firewall, downtime, reset, handshaking failures, exception handling alerts, sensitive data on the wire, and related protocol characteristics/attributes to troubleshoot) along with associated recommendations for mitigating the associated anomalies); and/or 5) determine an expected life cycle of the assets included in the system level network architecture 530 of the at least one industrial plant, as well as an expected life cycle of the system and/or industrial plant (e.g. lifecycle status - such as: "available", "mature", "obsolete", etc. associated with hardware and software (which may include for instance, a repair forecast, and decay percentage of the system and/or the industrial plan)); and/or determine software upgrade availability with upgrade recommendations for one or more of the assets included in the system level network architecture 530 of the at least one industrial plant; and/or 6) determine anomaly detection for a mesh network in the system level network architecture 530 of the at least one industrial plant (e.g., abnormal patterns of system and user usage, unauthorized physical/privilege access, sensitive data, percentage of reoccurring attacks/events/incidents, including false positives and negatives, and promiscuous mode indicators, and the like); 7) performing asset profiling for the one or more of the assets included in the system level network architecture 530 of the at least one industrial plant.; and predicts one or more security gaps for the system level network architecture 530 and determine one or more remedial actions to be initiated for the system level network architecture 530 in view of the predicted one or more security gaps.

And in accordance with yet other illustrated embodiments, the computer monitoring system 103 is further configured and operative to determine changes to the assets associated with the at least one industrial plant so as to 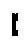 corresponding changes for the generated model of the system level network architecture 530 of the at least one industrial plant contingent on such changes.

Thus, it is to be appreciated and understood, the illustrated embodiments described herein provide an improved computer asset management tool/application (e.g., computer monitoring system 103) for dynamically determining and generating one or more system level network architectures 530 of at least one industrial plant, for enabling one more tasks (as mentioned above) to be performed on either the generated system level network architecture 530 and/or on one or more networked assets included in the generated system level network architecture 530, using one or more AI techniques as mentioned above. Additionally, via one or more AI techniques, a central data repository of aggregated data relating to networked assets from one or more industrial plants is generated, and dynamically updated with changes to assets, which is utilized to dynamical generate the aforesaid system level network architecture 530.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of the illustrated embodiments, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer-implemented method for performing one or more AI techniques on data captured from an Industrial Automation Control Systems (IACS) system, wherein the IACS is associated with at least one industrial plant, comprising the steps:
capturing, from the IACS, data relating to each of a plurality of assets associated with the at least one industrial plant;
analyzing, the captured IACS data, to determine a plurality of assets associated with the at least one industrial plant contained in the captured IACS data, and metadata respectively associated with each determined asset;
generating, an electronic data repository, that provides an electronic inventory for each of the plurality of assets and metadata associated with each of the plurality of assets; and
performing, by an AI engine coupled to the electronic data repository, one or more AI techniques on the plurality of assets and the metadata respectively associated with each determined asset, to perform a certain task.

2. The computer-implemented method as recited in claim 1, wherein performance of the one or more AI techniques generates a model of a system level network architecture of the at least one industrial plant including at least a portion of the plurality of assets and their respective associated metadata networked coupled to one another in correlation to how said assets are actually network coupled to one another in the industrial plant.

3. The computer-implemented method as recited in claim 2, wherein the generated system level network architecture of the at least one industrial plant is caused to be displayed on a user interactive graphically user interface (GUI) generated on a display of a user computing device such that user interaction with assets displayed on the GUI causes metadata information relating to a user selected asset to be then displayed on the GUI to the user, and/or
wherein performance of the one or more AI techniques further provides AI cybersecurity analysis for the generated model, of the system level network architecture of the at least one industrial plant,.
wherein in particular:
the AI cybersecurity analysis includes monitoring, and detecting, network security vulnerability of the generated model, or a plurality of generated models of the system level network architecture, and/or
wherein the AI cybersecurity analysis for the generated model of the system level network architecture of the at least one industrial plant is contingent upon regional standards and regulations relative to a geographic location associated with the at least one industrial plant, and/or
wherein the AI cybersecurity analysis includes determining, based upon AI predictive analytics, risk mitigations actions to be initiated for mitigating predictive risks sociated with the generated model of the system level network architecture of the at least one industrial plant, and/or
wherein the AI cybersecurity analysis includes determining licensing compliance for the at least a portion of the plurality of assets included in the generated model of a system level network architecture of the at least one industrial plant.

4. The computer-implemented method as recited in claim 2, wherein performance of the one or more AI techniques further provides asset management for the at least a portion of the plurality of assets included in the generated model of a system level network architecture of the at least one industrial plant, and/or
wherein performance of the one or more AI techniques further determines incident response by the system level network architecture of the at least one industrial plant responsive to contemplated one or more changes to the system level network architecture, and/or
wherein performance of the one or more AI techniques further determines one or more physical security vulnerabilities for at least one industrial plant based upon AI analysis of the system level network architecture of the at least one industrial plant, and/or
wherein performance of the one or more AI techniques further determines communications protocols used in the system level network architecture of the at least one industrial plant, and/or
wherein performance of the one or more AI techniques further determines an expected life cycle and of the assets included in the system level network architecture of the at least one industrial plant, and/or
wherein performance of the one or more AI techniques further determines software upgrade availability for one or more of the assets included in the system level network architecture of the at least one industrial plant, and/or
wherein performance of the one or more AI techniques further determines anomaly detection for a mesh network in the system level network architecture of the at least one industrial plant and/or
wherein performance of the one or more AI techniques further includes asset profiling for the one or more of the assets included in the system level network architecture of the at least one industrial plant.

5. The computer-implemented method as recited in any one of the preceding claims, wherein the data is captured from a plurality of data sources communicatively coupled to the IACS, including one or more of: distributed control system (DCS) configured assets and files; images of the asset; data sheets, device specifications, software and hardware engineering data, sensor devices, plant layout and drawings and data provided by one or more administrator users, and/or
wherein the step of determining an asset from the plurality of assets is based, at least in part, on analysis of network traffic data.

6. The computer-implemented method as recited in claim 3, wherein the AI cybersecurity analysis is based at least in part on risk tolerance and ALE (Annual loss Expectancy) associated with a customer associated with the at least one industrial plant.

7. The computer-implemented method as recited in any one of the preceding claims, wherein the one or more AI techniques are selected from the group consisting of: Gen AI, large and/or small language modeling (LLM and/or SLM with Retrieval Augmented Generation) techniques, recurrent neural networks (RNN); convolutional neural networks (CNN), Computer vision, Optical Character Recognition (OCR); deep learning algorithms, reinforcement learning, generative AI.

8. The computer-implemented method as recited in claim 2, further including the steps of:
determining changes to the assets associated with the at least one industrial plant so as to determine corresponding changes for the generated model of the system level network architecture of the at least one industrial plant; and/or
determining one or more system vulnerabilities for the at least one industrial plant so as to provide indication associated with nodes and/or assets on the generated model of the system level network architecture of the at least one industrial plant associated with the one or more system vulnerabilities.

9. The computer-implemented method as recited in claim 2, wherein the generated a model of a system level network architecture of the at least one industrial plant is a Purdue model, and/or
wherein the generated a model of a system level network architecture of the at least one industrial plant recommends the type of security assessment requirement (Advanced, Fundamental, Foundational or Basic), and/or
wherein the generated a model of a system level network architecture of the at least one industrial plant depicts the change management of the plant network (asset added or deleted and vulnerabilities introduced based on previous assessment or analysis), and/or
wherein the generated a model of a system level network architecture of the at least one industrial plant determines calibration posture and the requirement for the assets, part of the plant network.

10. The computer-implemented method as recited in claim 2, wherein the generated a model of a system level network architecture of the at least one industrial plant, auto train and evolves knowledge base of the customer's plant facilitating to improve the security posture on continuous basis,
wherein the generated knowledge model of a system level network architecture of the at least one industrial plant in particular enables custom queries (Gen AI and LLM/SLM based) to refine the self-managed contextual security assessment, contextual analytics and reports.

11. A computer system for performing one or more AI techniques on data captured from an Industrial Automation Control System (IACS) system, wherein the IACS is associated with at least one industrial plant, comprising:
one or more storage devices having instructions stored thereon that, when executed by one or more processors, cause the one or more processors to:
capture, from the IACS, data relating to each of a plurality of assets associated with the at least one industrial plant;
analyze, the captured IACS data, to determine a plurality of assets associated with the at least one industrial plant contained in the captured IACS data, and metadata respectively associated with each determined asset;
generate, an electronic data repository, that provides an electronic inventory for each of the plurality of assets and metadata associated with each of the plurality of assets; and
perform, by an AI engine coupled to the electronic data repository, one or more AI techniques on the plurality of assets and the metadata respectively associated with each determined asset, to perform a certain task.

12. The computer system as recited in claim 11, wherein performance of the one or more AI techniques generates a model of a system level network architecture of the at least one industrial plant including at least a portion of the plurality of assets and their respective associated metadata networked coupled to one another in correlation to how said assets are actually network coupled to one another in the industrial plant.

13. The computer system as recited in claim 12, wherein the generated system level network architecture of the at least one industrial plant is caused to be displayed on a user interactive graphically user interface (GUI) generated on a display of a user computing device such that user interaction with assets displayed on the GUI causes metadata information relating to a user selected asset to be then displayed on the GUI to the user.

14. The computer system as recited in claim 11, 12 or 13, wherein performance of the one or more AI techniques further provides AI cybersecurity analysis for the generated model, of the system level network architecture of the at least one industrial plant.

15. The computer-implemented method as recited in claim 1, wherein the IACS system consist of an Industrial Control and Safety Systems (ICSS), and/or
wherein the captured data includes data captured from third party assets, including non-network connected assets, and/or
wherein performance of the one or more AI techniques further predicts one or more security gaps, and determines one or more recommendations for securing the system level architecture for the industrial plant in view of the determined predicted one or more security gaps.
